# DEMANDE DE BREVET EUROPEEN

(11) **EP 4 810 852 A1**
(43) Date de publication de la demande: **23.09.2026**
(21) Numéro de dépôt: 26161916.7
(22) Date de dépôt: 03.03.2026
(51) Int. Cl.: F17C 13/08

(54) **PROCÉDÉ D' ESTIMATION DU VOLUME D'UN RÉSERVOIR DE GAZ SOUS PRESSION**

(30) Priorité: 19.03.2025 FR 2502789
(71) Demandeur: L'Air Liquide, Société Anonyme pour l'Etude et l'Exploitation des Procédés Georges Claude, 75007 Paris (FR)
(72) Inventeur: GONIN, Rémi, 75007 Paris (FR); AMMOURI, Fouad, 75007 Paris (FR); VEMPAIRE, David, 75007 Paris (FR)
(74) Mandataire: Air Liquide

(57) **Abrégé**

Procédé (10) d'estimation du volume d'un réservoir (2) de gaz sous pression, le procédé 10 comprenant une étape d'injection (S4) et une étape de calcul (S9) du volume du réservoir (2) en fonction de :
i) la pression initiale (p₀) du gaz dans le réservoir (2),
ii) la température initiale (T₀) du gaz dans le réservoir (2),
iii) une quantité (Δm) du flux de gaz injecté dans le réservoir (2),
iv) la température d'injection (T_inj) du flux de gaz dans le réservoir (2),
v) la variation (Δp) de la pression du gaz dans le réservoir (2),
caractérisé en ce que l'étape (S9) de calcul utilise également la durée (Δt) de l'étape d'injection (S4), ladite durée (Δt) étant définie entre un instant (t₁) marquant la fin de l'étape d'injection (S4) et un instant (t₀) marquant le début de l'étape d'injection (S4).

## Description

L'invention concerne un procédé d'estimation du volume d'un réservoir de gaz sous pression, dans lequel la durée de remplissage est prise en compte.

Le procédé selon l'invention trouve une application notamment dans le domaine de remplissage de réservoirs pour véhicules à pile à combustible (Fuel Cell Vehicle FCV) depuis une station de remplissage d'hydrogène (Hydrogen Refueling Station - HRS).

Pour remplir un réservoir à partir d'une station de distribution, il est nécessaire de connaître avec précision le volume total de ce réservoir, et de sélectionner en conséquence le protocole de remplissage le plus adapté. La donnée relative au volume et la sélection du protocole adapté permet de gagner en performance.

Le véhicule peut transmettre à la station de remplissage une donnée relative au volume du réservoir, comme cela est recommandé par la norme J2799 de la Society of Automotive Engineer (SAE). En l'absence de transmission d'une donnée de volume par le véhicule, ou aux fins de vérifier la fiabilité d'une donnée de volume reçue depuis le véhicule, la station de remplissage peut estimer de son côté ce volume.

L'estimation du volume du réservoir par la station de remplissage est réalisée lors d'une étape initiale de remplissage (en anglais start up time).

Pour ce faire, à un instant t₀ [s], une mise à l'équilibre de pression est réalisée entre la station de remplissage ( et plus spécifiquement un distributeur de la station de remplissage) et le réservoir à remplir.

Cette mise à l'équilibre permet de déterminer une première pression p₀ [Pa] dans le réservoir. Elle est suivie d'une étape d'injection d'une masse Δm [kg] de gaz dans le réservoir.

A la suite de cette injection, à un instant t₁ [s] postérieur à l'instant t₀ [s], une nouvelle mise à l'équilibre de pression est réalisée entre le distributeur de la station et le réservoir, permettant de déterminer une deuxième pression p₁ [Pa] dans le réservoir.

Le volume V [m³] du réservoir peut ainsi être calculé de la manière suivante, $V = \frac{Δm}{ρ \left({p}_{1}, {T}_{1}\right) - ρ \left({p}_{0}, {T}_{0}\right)}$ Avec
ρ [kg/m3] la masse volumique du gaz,
ρ(*p*₁, *T*₁) *-* ρ(*p*₀, *T*₀), la différence de masse volumique entre les instants t₀ et t₁,
T₀[K], la température à l'instant t₀, considérée égale à la température ambiante, et
T₁[K] la température à l'instant t₁, estimée via des hypothèses ou des corrélations.

Une première difficulté associée à cette méthode d'estimation du volume V du réservoir est qu'un échauffement de gaz se produit dans le réservoir du fait du remplissage. La température T₁ à l'instant t₁ dans le gaz est donc nécessairement supérieure à la température T₀ à l'instant t₀.

Une prédiction de la température T₁ requiert une modélisation de l'échange thermique entre le gaz dans le réservoir et les parois de celui-ci, de la conduction thermique dans les parois du réservoir, et de l'échange thermique entre les parois du réservoir et le milieu extérieur. Aux fins de cette modélisation, il est nécessaire de connaître des propriétés thermiques et géométriques du réservoir, lesquelles ne sont pas connues à priori de la station de remplissage.

En l'absence de données relatives aux propriétés thermiques et géométriques du réservoir, une première approche consiste à négliger la montée en température. Cela revient à supposer que T₁ est proche de T₀ (c.-à-d. T₁=T₀). Une telle approximation est justifiée si l'étape d'estimation du volume V du réservoir est suivie d'un long temps de repos.

L'hypothèse ci-dessus, dite de remplissage isotherme, permet d'exprimer la formule (1) précédente de la manière suivante : ${V}_{iso} = \frac{Δm}{ρ \left({p}_{1}, {T}_{0}\right) - ρ \left({p}_{0}, {T}_{0}\right)} ,$

Comme la masse volumique ρ [kg/m³] est décroissante avec la température, l'hypothèse d'un remplissage isotherme tend à sous-estimer le volume V du réservoir.

Une seconde approche, décrite dans une demande de brevet (FR 2307995) déposée par le demandeur, consiste à négliger les transferts thermiques entre le gaz et les parois intérieures du réservoir, et à prendre en compte la température du gaz injecté Tᵢₙⱼ [°C]. Cette hypothèse, dite adiabatique, est justifiée si l'étape d'estimation du volume est rapide.

L'hypothèse d'un remplissage adiabatique conduit à surestimer le volume V du réservoir, et à exprimer la relation (1) ci-dessus de la manière suivante : ${V}_{adia} = f \left({T}_{0}, {p}_{0}, {T}_{inj}\right) \frac{Δm}{Δp} ,$ Avec$Δ p = p 1 - p 0 et$ *f* [MPa.L/kg] une fonction définie sous une forme polynomiale issue d'une modélisation physique.

Une troisième approche, proposée par Handa et al. (voir « S. Yamaguchi, Y. Fujita, K. Handa. New Tank Volume Estimation Method for Hydrogen Fueling. Society of Automotive Engineers of Japan, Presented at EVS 31 & EVTeC 2018, Kobe, Japan, October 1 - 3, 2018 »), ou bien par la SAE J2601-5 (voir « SAE International Information Report, High-Flow Prescriptive Fueling Protocols for Gaseous Hydrogen Powered Medium and Heavy-Duty Vehicles, SAE Standard J2601/5_202402, Issued February 2024, https://doi.org/10.4271/J2601/5_202402. »), consiste à exprimer la température T₁ comme une fonction de la pression initiale p₀, puis d'injecter l'expression de T₁ dans la relation (1) ci-dessus.

La relation entre la température T₁ et la pression initiale p₀ peut s'écrire de la manière suivante : ${T}_{1} = {T}_{0} + 27.79 - 1.4867 {p}_{0} + 0.03834 {{p}_{0}}^{2} - 0.0003513 {p}_{0} ,$ avec *p*₀ [MPa].

Une seconde difficulté associée à la méthode d'estimation du volume V réside dans le fait que la pression p₁ à l'instant t₁ doit être assez grande par rapport à la pression p₀ à l'instant t₀, de sorte à permettre, selon la précision du capteur de pression prévu au niveau du distributeur, une bonne évaluation de la différence de masse volumique entre les instants t₀ et t₁.

Or, l'élévation Δp de pression dépend de la masse Δm de gaz injecté dans le réservoir, et du volume V du réservoir. Handa et al. dans *«*S. Yamaguchi, Y. Fujita, K. Handa. New Tank Volume Estimation Method for Hydrogen Fueling. Society of Automotive Engineers of Japan, Presented at EVS 31 & EVTeC 2018, Kobe, Japan, October 1 - 3, 2018») montrent que pour atteindre une élévation de pression supérieure à 2.5 MPa dans le réservoir, la masse Δm peut largement dépasser les 200 g, notamment lorsque le volume du réservoir dépasse 100 L.

Durant l'étape initiale de remplissage (start up time), la masse d'hydrogène injectée doit rester inférieure à 200 g. Cette contrainte impose d'effectuer l'étape d'estimation du volume hors de cette étape initiale afin de permettre une montée en pression suffisante et une bonne évaluation de la différence de masse volumique entre les instants t₀ et t₁.

Pour répondre à cette contrainte, la SAE J2601-5 prévoit une estimation du volume V d'un réservoir pendant le remplissage proprement dit, pas seulement dans le cadre de l'étape initiale (start up time) de remplissage. Pour ce faire, une rampe de pression lente et variable avec la température ambiante est sélectionnée.

Cependant, la mise en œuvre d'une telle rampe de pression exclut la possibilité d'estimer le volume d'un réservoir dans le cas d'un remplissage adiabatique. De même, l'estimation du volume dans le cas d'un remplissage isotherme n'est pas non plus envisageable, car le temps de repos, une fois la pression dans le distributeur est atteinte, n'est pas suffisant pour laisser la température dans le réservoir revenir à la température ambiante.

Par ailleurs, il est établi que l'estimation de la température *T*₁ conformément à la méthode préconisée par la SAE J2601-5 n'est pas non plus satisfaisante. En effet, la température estimée ne dépend pas de l'élévation de la pression dans le réservoir. En outre, cette température estimée n'est pas fonction de la température d'injection, ni fonction de la durée de remplissage.

Or, la pression initiale agit sur la vitesse du gaz injecté, et donc sur les pertes de charge entre le distributeur de la station et le réservoir. Autrement dit, à haute pression, les pressions au niveau du distributeur de la station et dans le réservoir seront voisines. La différence de pression nécessaire dans le réservoir pour appliquer l'estimation de volume sera atteinte plus rapidement.

Quant à la température ambiante, qui est comprise entre -40°C et 50°C dans les tables de la SAE (voir SAE International Technical Standard, Fueling Protocols for Light Duty Gaseous Hydrogen Surface Vehicles, SAE Standard J2601_202005, Revised May 2020, Issued March 2010, https://doi.org/10.4271/J2601_202005), elle agit sur la rampe de pression la plus conservative. Par exemple, pour un certain type de stations de remplissage, la rampe la plus conservative est 15.7 MPa/min à la température ambiante -40°C, alors qu'elle est de 1.2 MPa/min à la température ambiante 50°C.

Enfin, en ce qui concerne la durée de remplissage, elle peut être largement variable en fonction de la pression initiale, i.e. la densité initiale du gaz dans le réservoir, et de la température ambiante. Ne pas tenir compte de ce paramètre conduit à une estimation moins précise du volume.

Pour finir, pendant l'injection du gaz dans le réservoir entre les instants t₀ et t₁, la pression dans ce réservoir peut être largement plus faible que celle mesurée au niveau du distributeur, en raison notamment des pertes de charge dans la conduite de remplissage, essentiellement lors de potentiels blocages soniques. Pour tenir compte de ces pertes de charges, et déterminer de façon précise l'élévation *Δp* de la pression dans le réservoir, la littérature propose différentes corrélations entre l'élévation *Δp_{disp}* [MPa] de la pression au niveau du distributeur et la pression initiale *p*₀ [MPa] dans le réservoir. Toutefois, l'élévation de pression ainsi obtenue n'est pas toujours précise.

Un exemple d'une telle corrélation, décrit dans « SAE International Information Report, High-Flow Prescriptive Fueling Protocols for Gaseous Hydrogen Powered Medium and Heavy-Duty Vehicles, SAE Standard J2601/5_202402, Issued February 2024, https://doi.org/10.4271/J2601/5_202402 »), est donné ci-après, où l'élévation *Δp_{disp}* [MPa] de la pression au niveau du distributeur de la station de remplissage dépend de la pression initiale *p*₀ [MPa] dans le réservoir : ${Δp}_{disp} = {p}_{0} + 13.03 - 0.3642 {p}_{0} + 0.007208 {{p}_{0}}^{2} - 0.00000542 {{p}_{0}}^{3} ,$

Il apparaît dès lors un besoin de développer un procédé d'estimation du volume d'un réservoir à remplir, qui permette une estimation la plus précise possible du réservoir.

A cet effet, l'invention introduit un procédé d'estimation du volume d'un réservoir de gaz sous pression. Le procédé comprend les étapes suivantes :
- a) détermination de la pression initiale du gaz dans le réservoir,
- b) détermination de la température initiale du gaz dans le réservoir,
- c) injection d'un flux de gaz sous pression dans le réservoir,
- d) détermination de la température d'injection du flux de gaz dans le réservoir,
- e) détermination de la quantité du flux de gaz injecté dans le réservoir au cours de l'étape d'injection,
- f) détermination de la variation de la pression du gaz dans le réservoir, entre une pression finale déterminée à la fin de l'étape d'injection et la pression initiale déterminée au début de l'étape d'injection,
- g) calcul du volume du réservoir en fonction de :
   i) la pression initiale du gaz dans le réservoir,
   ii) la température initiale du gaz dans le réservoir,
   iii) la température d'injection du flux de gaz dans le réservoir,
   iv) la masse du flux de gaz injecté dans le réservoir,
   v) la variation de la pression du gaz dans le réservoir,

Selon l'invention, l'étape de calcul utilise également la durée de l'étape d'injection, ladite durée étant définie entre un instant marquant la fin de l'étape d'injection et un instant marquant le début de l'étape d'injection.

Des modes de réalisation de l'invention peuvent comporter l'une ou plusieurs des caractéristiques suivantes :
- l'étape de calcul du volume utilise également un paramètre prédéterminé tenant compte à la fois de la géométrie et du matériau du réservoir,
- le paramètre prédéterminé est le produit d'une longueur caractéristique du réservoir par un coefficient d'échange thermique entre le gaz sous pression et une paroi intérieure du réservoir,
- la longueur caractéristique a une valeur comprise entre une borne inférieure associée à un premier réservoir de référence de forme sphérique, et une borne supérieure associée à un deuxième réservoir de référence de forme cylindrique,
- la borne inférieure de la longueur caractéristique est égale au tiers d'un premier rayon intérieur du premier réservoir de référence de forme sphérique,
- la borne supérieure de la longueur caractéristique est égale à la moitié d'un deuxième rayon intérieur du deuxième réservoir de référence de forme cylindrique,
- le coefficient d'échange thermique a une valeur comprise entre une borne inférieure prédéterminée égale à 150 *W*/*m²*/*K*, et une borne supérieure prédéterminée égale à *10 000 W*/*m²*/*K.*
- l' étape de détermination de la température d'injection du gaz dans le réservoir est réalisée à l'aide d'un capteur de température disposé au niveau d'une station de remplissage à laquelle est relié le réservoir,
- la température initiale est estimée égale à la température ambiante dans une région environnante du réservoir,
- l'étape de calcul du volume du réservoir utilise une fonction ou formule mathématique V obtenue à partir d'un bilan de conservation de la masse et de l'énergie du gaz injecté dans le réservoir,
- la fonction V s'exprime de la manière suivante : $V = \frac{1}{{t}_{1} - {t}_{0}} {\int }_{{t}_{0}}^{{t}_{1}} \frac{\left[{\left.1-\frac{\partial ρ}{\partial T}\right|}_{p}\left[\frac{\left(h\left(p, {T}_{inj}\right)-h\left(p, T\right)\right)}{{ρc}_{p} + Λ \left(t-{t}_{1}\right)}\right]\right]}{\left[{\left.\frac{\partial ρ}{\partial p}\right|}_{T}+{\left.\frac{\partial ρ}{\partial T}\right|}_{p}\left[\frac{βT}{{ρc}_{p} + Λ \left(t-{t}_{1}\right)}\right]\right]} dt \frac{dm}{dp}$ Avec
   *ρ* [*kg*/*m*³] la masse volumique du gaz,
   *T* [*K*] la température du gaz,
   *p* [*bar*] la pression du gaz,
   *t* [*s*] le temps
   *cₚ* [*J*/*K*/*kg*] la capacité calorifique du gaz,
   *β* [1/*K*] le coefficient de dilatation isobare du gaz,
   *h* [J/kg] l'enthalpie du gaz,
   *Tᵢₙⱼ* [*K*] une moyenne temporelle de la température du gaz injecté,
   A [W/m/K] un paramètre tenant compte de la géométrie et du matériau du réservoir.
      - la fonction V prend l'une des deux formes suivantes V_{adia} et Vᵢₛₒ selon le temps de remplissage :
         Lorsque le temps de remplissage tend vers zéro (remplissage réalisé en moins de 5 secondes), la fonction V prend la forme V_{adia} suivante : ${V}_{adia} = \frac{\left[1-{\left.\frac{\partial ρ}{\partial T}\right|}_{p}\left[\frac{\left(h\left(p, {T}_{inj}\right)-h\left(p, T\right)\right)}{{ρc}_{p}}\right]\right]}{\left[{\left.\frac{\partial ρ}{\partial p}\right|}_{T}+{\left.\frac{\partial ρ}{\partial T}\right|}_{p}\left[\frac{βT}{{ρc}_{p}}\right]\right]} \frac{Δm}{Δp} ;$
         Lorsque le temps de remplissage tend vers l'infini (temps de remplissage supérieure à 20 minutes), la fonction (V) prend la forme (Vᵢₛₒ) suivante : ${V}_{iso} = \frac{1}{\left[{\left.\frac{\partial ρ}{\partial p}\right|}_{T}\right]} \frac{Δm}{Δp}$

L'invention sera mieux comprise, et d'autres avantages apparaîtront à la lecture de la description qui suit, en référence aux figures suivantes :
[Fig. 1] illustre de façon schématique un réservoir de véhicule relié à une station de remplissage.

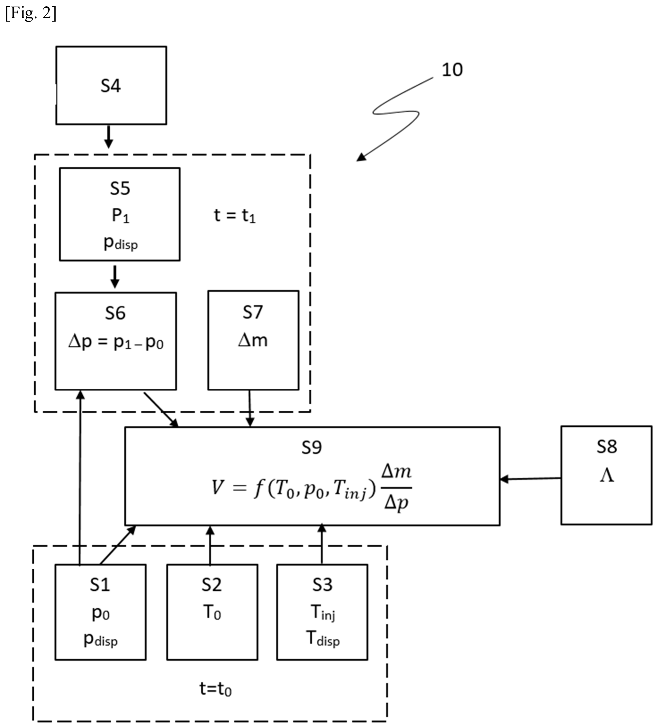

[Fig. 2] illustre des étapes d'un procédé selon l'invention pour estimer le volume du réservoir illustré à la [Fig. 1].

L'invention concerne un procédé 10 d'estimation du volume d'un réservoir 2 de gaz sous pression. Le gaz considéré peut être de l'hydrogène. Le réservoir 2 est alors un réservoir d'hydrogène sous pression (de l'anglais Compressed Hydrogen Storage System CHSS).

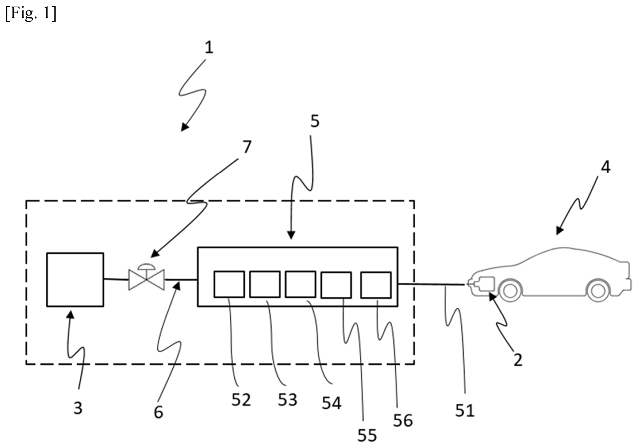

Le réservoir 2 peut être celui d'un véhicule 4 à pile à combustible. Il peut s'agir d'un réservoir unique ou d'un ensemble de réservoirs équipant le véhicule 4. En outre, le réservoir 2 peut être alimenté par une station 1 de remplissage comme le montre la [Fig. 1].

La station 1 de remplissage comprend une source 3 de gaz et un distributeur 5 destiné à recevoir le véhicule 4.

Le distributeur 5 est relié à la source 3 de gaz au moyen d'une ligne 6 de transfert qui comprend au moins un organe 7 de contrôle de pression et/ou de débit du fluide. En outre, le distributeur 5 comprend une conduite 51 d'alimentation pourvue à son extrémité d'un pistolet destiné à être reçu dans un réceptacle du réservoir 2. Le distributeur 5 peut être équipé d'un capteur 52 de pression du fluide transféré, d'un capteur 53 de température du fluide transféré, d'un capteur 54 de débit massique du fluide transféré, d'un capteur 55 de température de la température ambiante et d'une vanne 56.

Le procédé 10 comprend une étape S1 de détermination de la pression initiale p₀ du gaz dans le réservoir 2, une étape S2 de détermination de la température initiale T₀ du gaz dans le réservoir 2, et une étape S3 de détermination de la température *Tᵢₙⱼ* d'injection.

La pression initiale p₀ dans le réservoir 2 peut être déterminée à l'aide du capteur 51 de pression installé au niveau du distributeur 5 de la station 1 de remplissage.

La température T₀ du gaz dans le réservoir 2 peut être assimilée à la température ambiante mesurée dans une zone environnante du réservoir 2. Elle peut donc être mesuré par le capteur 54 de température disposé au niveau du distributeur 5 ou par tout autre capteur de température situé dans la zone environnante de la station 1 de remplissage.

Quant à la température *Tᵢₙⱼ* d'injection, elle peut être déterminée de façon avantageuse à l'aide du capteur 53 de température positionné au niveau du distributeur 5.

Le procédé 10 comprend une étape S4 d'injection d'un flux de fluide sous pression dans le réservoir 2 à remplir, à l'aide du distributeur 5. En particulier, l'étape S4 d'injection s'étend sur une durée Δt définie entre un instant t₀ marquant le début de l'étape S4 d'injection et un instant t₁ marquant la fin de l'étape S4 d'injection.

Pour assurer l'injection du gaz dans le réservoir 2 depuis la station 1 de remplissage, l'organe 7 de contrôle de pression et/ou de débit et la vanne 53 sont maintenus ouverts.

A la fin de l'étape S4 d'injection, le procédé 10 prévoit une étape S6 de détermination de la variation Δp de pression dans le réservoir 2, entre la pression initiale p₀ déterminée à l'instant t₀, lors de l'étape S1 antérieure à l'étape S4 d'injection, et une pression finale p₁ déterminée à l'instant t₁, lors d'une étape S5 postérieure à l'étape S4 d'injection.

De même, le procédé 10 prévoit une étape S7 de détermination d'une quantité Δm du flux de fluide injecté dans le réservoir 2.

Enfin, le procédé 10 prévoit une étape S9 de calcul du volume V du réservoir 2 en fonction des paramètres déterminés ci-dessus, à savoir la pression initiale p₀ et la température initiale T₀ du gaz dans le réservoir 2, la température d'injection *Tᵢₙⱼ* du flux de fluide dans le réservoir 2, la masse Δm du flux de fluide injecté, et la variation Δp de pression.

Il convient de noter que la température *Tᵢₙⱼ* d'injection du flux de fluide dans le réservoir 2 peut être déterminée au cours ou après l'étape S4 d'injection du gaz dans le réservoir 2, et pas nécessairement à l'étape S1 antérieure à l'étape S4 d'injection.

Selon l'invention, l'étape S9 de calcul du volume V du réservoir 2 utilise également la durée Δt de l'étape d'injection.

Le volume V du réservoir 2 s'exprime alors de la manière suivante : $V = f \left({T}_{0}, {p}_{0}, {T}_{inj}, Δt\right) \frac{Δm}{Δp} ,$ Avec *f(T*₀, *p*₀, *Tᵢₙⱼ, Δt*) une fonction qui dépend de la température initiale *T*₀ [°C] et de la pression initiale *p*₀ [MPa] du gaz dans le réservoir 2, ainsi que de la température du gaz injecté *Tᵢₙⱼ* [°C] dans le réservoir 2, et de la durée Δ*t* [s] de remplissage.

La fonction *f(T*₀, *p*₀, *Tᵢₙⱼ, Δt*) peut être obtenue à partir d'un bilan de conservation de la masse m et de l'énergie du gaz injecté dans le réservoir 2, comme décrit plus loin. Elle dépend alors des propriétés thermophysiques du gaz.

En variante, la fonction *f(T*₀, *p*₀, *Tᵢₙⱼ, Δt*) peut être obtenue via un polynôme interpolateur.

De façon avantageuse, l'étape S9 de calcul du volume V utilise également un paramètre A prédéterminé qui tient compte à la fois de la géométrie et du matériau du réservoir 2. Ce paramètre A est déterminé lors d'une étape S8, antérieure à l'étape S9. Selon la valeur prédéterminée du paramètre A, l'estimation du volume V sera soit une surestimation, soit une sous-estimation, selon le besoin final.

Plus spécifiquement, le paramètre A est le rapport entre un coefficient *k_{g}* d'échange thermique entre le gaz sous pression et une paroi intérieure du réservoir 2 et une longueur caractéristique *l_{c}* du réservoir 2. La longueur caractéristique *l_{c}* s'exprime par exemple en mètres. Le coefficient *k_{g}* d'échange thermique s'exprime par exemple en watts par mètres carrés par Kelvin [*W*/*m²*/*K*] . Ainsi, le paramètre A prédéterminé peut s'exprimer en Watts par mètres cubes par Kelvin [*W*/*m³*/*K*]*.*

La longueur caractéristique *l_{c}* a une valeur comprise entre une borne inférieure associée à un premier réservoir de référence de forme sphérique, et une borne supérieure associée à un deuxième réservoir de référence de forme cylindrique. Le calcul de la borne inférieure et de la borne supérieure de la longueur caractéristique est présenté plus loin.

Quant au coefficient *k_{g}* d'échange thermique entre le gaz sous pression et la paroi intérieure du réservoir 2, il a une valeur comprise entre une borne inférieure prédéterminée égale à 150 *W*/*m²*/*K*, et une borne supérieure prédéterminée égale à 10 000 *W*/*m²*/*K.*

Détermination de la fonction *f(T*₀, *p*₀, *Tᵢₙⱼ, Δt*)
La présente section a pour objectif de détailler les étapes de calcul permettant de construire la fonction *f(T*₀, *p*₀, *Tᵢₙⱼ, Δt*) servant à estimer le volume V du réservoir 2.

En supposant le gaz comme un volume homogène en température et en pression, c.-à-d. en masse volumique, la masse m[kg] du gaz dans le réservoir 2 peut s'écrire de la manière suivante : $m = ρV ,$ Avec
$ρ \left[\frac{kg}{{m}^{3}}\right]$ la masse volumique du gaz et
*V*[*m*³] le volume du réservoir 2, lequel est constant.

On peut écrire : $dm = V \left[{\left.\frac{\partial ρ}{\partial p}\right|}_{T}dp+{\left.\frac{\partial ρ}{\partial T}\right|}_{p}dT\right] ,$ et donc $\dot{m} = V \left[{\left.\frac{\partial ρ}{\partial p}\right|}_{T}\frac{dp}{dt}+{\left.\frac{\partial ρ}{\partial T}\right|}_{p}\frac{dT}{dt}\right] ,$ Avec
$\dot{m} \left[\frac{kg}{s}\right]$ le débit massique injecté,
*T*[*K*] la température du gaz et
*p* la pression dans le gaz et
*t*[*s*] le temps.

Pour évaluer l'expression $\frac{dT}{dt}$*,* on applique un bilan de conservation de masse et d'énergie sur le volume de gaz .

L'équation de conservation de la masse s'écrit, $\frac{dm}{dt} = \dot{m} ,$ et l'équation de conservation de l'énergie s'écrit, ${mc}_{p} \frac{dT}{dt} = VβT \frac{dp}{dt} + {k}_{g} {S}_{w} \left({T}_{g , w}-T\right) + \dot{m} \left(h\left(p, {T}_{inj}\right)+\frac{{{u}_{inj}}^{2}}{2}-h\left(p, T\right)\right) ,$ avec
*cₚ*[*J*/*K*/*kg*] la capacité calorifique du gaz,
$β \left[\frac{1}{K}\right]$ le coefficient de dilatation isobare du gaz,
*k_{g}*[W/m²/K] le coefficient d'échange thermique entre le gaz et la paroi intérieure du réservoir 2,
*S_{w}*[*m²*] la surface de la paroi intérieure du réservoir 2,
*T_{g,w}*[*K*] la température moyenne de la paroi intérieure du réservoir 2,
*h* [J/kg] l'enthalpie du gaz,
*Tᵢₙⱼ*[*K*] la température du gaz injecté, et
*uᵢₙⱼ*[*m*/*s*] la vitesse du gaz injecté.

L'énergie cinétique du gaz injecté peut être négligée par rapport à la différence d'enthalpie, i.e. $\frac{{{u}_{inj}}^{2}}{2} ≪ h \left(p, {T}_{inj}\right) - h \left(p, T\right) ,$

La relation (11) devient alors : ${mc}_{p} \frac{dT}{dt} = VβT \frac{dp}{dt} + {k}_{g} {S}_{w} \left({T}_{g , w}-T\right) + \dot{m} \left(h\left(p, {T}_{inj}\right)-h\left(p, T\right)\right) ,$ On peut diviser la relation (13) par *mcₚ,* $\frac{dT}{dt} = \frac{VβT}{{mc}_{p}} \frac{dp}{dt} + \frac{{k}_{g} {S}_{w} \left({T}_{g , w}-T\right)}{{mc}_{p}} + \dot{m} \frac{h \left(p, {T}_{inj}\right) - h \left(p, T\right)}{{mc}_{p}} ,$

La différence de températures *T - T_{g,w}* entre le gaz et la paroi du réservoir est approximée par l'évolution de la température du gaz. En effet, il est probable qu'en début de remplissage, les températures du gaz et de la paroi soient très proches. L'écart de températures *T - T_{g,w}* se créera lorsque la température du gaz augmentera.

Ainsi, on peut écrire : $T - {T}_{g , w} \approx dT ,$

On peut effectuer les transformations suivantes de la relation (14) : $\frac{dT}{dt} = \frac{VβT}{{mc}_{p}} \frac{dp}{dt} - \frac{{k}_{g} {S}_{w} dT}{{mc}_{p}} + \dot{m} \frac{h \left(p, {T}_{inj}\right) - h \left(p, T\right)}{{mc}_{p}} ,$ puis, $\frac{dT}{dt} = \frac{VβT}{{ρVc}_{p}} \frac{dp}{dt} - \frac{{k}_{g} {S}_{w} δt}{{ρVc}_{p}} \frac{dT}{dt} + \dot{m} \frac{h \left(p, {T}_{inj}\right) - h \left(p, T\right)}{{ρVc}_{p}} ,$ avec *δt* [s] une variation temporelle élémentaire.

Ainsi, $\frac{dT}{dt} = \left[\frac{{ρc}_{p}}{{ρc}_{p} + {k}_{g} \frac{{S}_{w}}{V} δt}\right] \left[\frac{βT}{{ρc}_{p}}\frac{dp}{dt}+\dot{m}\frac{h \left(p, {T}_{inj}\right) - h \left(p, T\right)}{{ρVc}_{p}}\right] ,$ puis, $\frac{dT}{dt} = \left[\frac{1}{{ρc}_{p} + {k}_{g} \frac{{S}_{w}}{V} δt}\right] \left[βT\frac{dp}{dt}+\dot{m}\frac{h \left(p, {T}_{inj}\right) - h \left(p, T\right)}{V}\right]$

On peut alors injecter (19) dans (9), $\dot{m} = V \left[{\left.\frac{\partial ρ}{\partial p}\right|}_{T}\frac{dp}{dt}+{\left.\frac{\partial ρ}{\partial T}\right|}_{p}\left[\frac{1}{{ρc}_{p} + {k}_{g} \frac{{S}_{w}}{V} δt}\right]\left[βT\frac{dp}{dt}+\dot{m}\frac{h \left(p, {T}_{inj}\right) - h \left(p, T\right)}{V}\right]\right] ,$ puis réorganiser (20) pour faire apparaître la relation entre le débit massique et l'évolution de la pression, $\dot{m} = V \left[{\left.\frac{\partial ρ}{\partial p}\right|}_{T}+{\left.\frac{\partial ρ}{\partial T}\right|}_{p}\left[\frac{βT}{{ρc}_{p} + {k}_{g} \frac{{S}_{w}}{V} δt}\right]\right] \frac{dp}{dt} + \dot{m} V {\left.\frac{\partial ρ}{\partial T}\right|}_{p} \left[\frac{\left(h\left(p, {T}_{inj}\right)-h\left(p, T\right)\right)}{V \left({ρc}_{p}+{k}_{g}\frac{{S}_{w}}{V}δt\right)}\right] ,$ $\dot{m} = V \left[{\left.\frac{\partial ρ}{\partial p}\right|}_{T}+{\left.\frac{\partial ρ}{\partial T}\right|}_{p}\left[\frac{βT}{{ρc}_{p} + {k}_{g} \frac{{S}_{w}}{V} δt}\right]\right] \frac{dp}{dt} + \dot{m} {\left.\frac{\partial ρ}{\partial T}\right|}_{p} \left[\frac{\left(h\left(p, {T}_{inj}\right)-h\left(p, T\right)\right)}{{ρc}_{p} + {k}_{g} \frac{{S}_{w}}{V} δt}\right] ,$ $\dot{m} \left[1-{\left.\frac{\partial ρ}{\partial T}\right|}_{p}\left[\frac{\left(h\left(p, {T}_{inj}\right)-h\left(p, T\right)\right)}{{ρc}_{p} + {k}_{g} \frac{{S}_{w}}{V} δt}\right]\right] = V \left[{\left.\frac{\partial ρ}{\partial p}\right|}_{T}+{\left.\frac{\partial ρ}{\partial T}\right|}_{p}\left[\frac{βT}{{ρc}_{p} + {k}_{g} \frac{{S}_{w}}{V} δt}\right]\right] \frac{dp}{dt} ,$ $\frac{dp}{dt} = \frac{\left[1-{\left.\frac{\partial ρ}{\partial T}\right|}_{p}\left[\frac{\left(h\left(p, {T}_{inj}\right)-h\left(p, T\right)\right)}{{ρc}_{p} + {k}_{g} \frac{{S}_{w}}{V} δt}\right]\right]}{V \left[{\left.\frac{\partial ρ}{\partial p}\right|}_{T}+{\left.\frac{\partial ρ}{\partial T}\right|}_{p}\left[\frac{βT}{{ρc}_{p} + {k}_{g} \frac{{S}_{w}}{V} δt}\right]\right]} \dot{m} ,$

Ainsi, $V \frac{dp}{dt} = \frac{\left[1-{\left.\frac{\partial ρ}{\partial T}\right|}_{p}\left[\frac{\left(h\left(p, {T}_{inj}\right)-h\left(p, T\right)\right)}{{ρc}_{p} + {k}_{g} \frac{{S}_{w}}{V} δt}\right]\right]}{\left[{\left.\frac{\partial ρ}{\partial p}\right|}_{T}+{\left.\frac{\partial ρ}{\partial T}\right|}_{p}\left[\frac{βT}{{ρc}_{p} + {k}_{g} \frac{{S}_{w}}{V} δt}\right]\right]} \dot{m} ,$ Et finalement, $V {\int }_{{t}_{0}}^{{t}_{1}} \frac{dp}{dt} dt = {\int }_{{t}_{0}}^{{t}_{1}} \frac{\left[1-{\left.\frac{\partial ρ}{\partial T}\right|}_{p}\left[\frac{\left(h\left(p, {T}_{inj}\right)-h\left(p, T\right)\right)}{{ρc}_{p} + {k}_{g} \frac{{S}_{w}}{V} δt}\right]\right]}{\left[{\left.\frac{\partial ρ}{\partial p}\right|}_{T}+{\left.\frac{\partial ρ}{\partial T}\right|}_{p}\left[\frac{βT}{{ρc}_{p} + {k}_{g} \frac{{S}_{w}}{V} δt}\right]\right]} \dot{m} dt ,$ $VΔp = {\int }_{{t}_{0}}^{{t}_{1}} \frac{\left[1-{\left.\frac{\partial ρ}{\partial T}\right|}_{p}\left[\frac{\left(h\left(p, {T}_{inj}\right)-h\left(p, T\right)\right)}{{ρc}_{p} + {k}_{g} \frac{{S}_{w}}{V} δt}\right]\right]}{\left[{\left.\frac{\partial ρ}{\partial p}\right|}_{T}+{\left.\frac{\partial ρ}{\partial T}\right|}_{p}\left[\frac{βT}{{ρc}_{p} + {k}_{g} \frac{{S}_{w}}{V} δt}\right]\right]} \dot{m} dt$

Afin de calculer l'intégrale de l'équation (27), plusieurs approximations seront faites comme indiqué ci-après.

L'évolution temporelle élémentaire *δt* sera estimée tel que, $δt \approx t - {t}_{0} .$

Le débit massique *ṁ* sera remplacé par le débit moyen, $\dot{m} \approx \frac{Δm}{Δt} ,$ Avec Δ*t* = *t*₁ *- t*₀ la variation temporelle correspondant à la durée de la méthode d'estimation du volume.

Le rapport volume/surface d'un réservoir 2, donné par $\frac{V}{{S}_{w}} \left[m\right]$, dépend de la géométrie du réservoir 2. Ce rapport est homogène à une longueur caractéristique, notée ${l}_{c} = \frac{V}{{S}_{w}} \left[m\right]$. Ce rapport peut être borné.

Dans le cas d'un réservoir 2 de forme sphérique, la longueur caractéristique *l_{c}* est minimale et s'écrit de la manière suivante: ${l}_{c} = \frac{{R}_{int}}{3} ,$ avec *Rᵢₙₜ*[*m*] le diamètre intérieur du réservoir 2.

Dans le cas d'un réservoir 2 de géométrie cylindrique, la longueur caractéristique *l_{c}* peut s'écrire: ${l}_{c} = \frac{{L}_{int} {R}_{int}}{2 \left({L}_{int}+{R}_{int}\right)} ,$ avec *Lᵢₙₜ* [m] la longueur intérieure du réservoir 2.

Dans le cas où la longueur intérieure *Lᵢₙₜ* est très grande comparée au diamètre intérieur *Rᵢₙₜ,* la longueur caractéristique est maximale, ${l}_{c} = \frac{{R}_{int}}{2} ,$

Ainsi, en se basant sur les données fournies dans la SAE J2601 [2], on peut donner un valeur de cette longueur caractéristique: *l_{c}* = 0.066,0.171 m.

La valeur du coefficient *k_{g}*[W/m²/K] d'échange thermique entre le gaz et la paroi du réservoir est également inconnue, car elle dépend de la géométrie et des matériaux du réservoir 2, de l'injecteur et du débit massique. En se basant sur des calculs prenant les hypothèses les plus extrêmes, il peut être accepté que cette valeur reste sous 10 000 W/m²/K.

On définit le produit ${k}_{g} \frac{{S}_{w}}{V}$ via un unique paramètre *Λ* [W/m³/K ] qui sera supposé fixé. $Λ = {k}_{g} \frac{{S}_{w}}{V} ,$

Ainsi, en utilisant (27), (28), (29) et (33), on obtient: $V = \frac{1}{{t}_{1} - {t}_{0}} {\int }_{{t}_{0}}^{{t}_{1}} \frac{\left[1-{\left.\frac{\partial ρ}{\partial T}\right|}_{p}\left[\frac{\left(h\left(p, {T}_{inj}\right)-h\left(p, T\right)\right)}{{ρc}_{p} + {k}_{g} \frac{{S}_{w}}{V} δt}\right]\right]}{\left[{\left.\frac{\partial ρ}{\partial p}\right|}_{T}+{\left.\frac{\partial ρ}{\partial T}\right|}_{p}\left[\frac{βT}{{ρc}_{p} + {k}_{g} \frac{{S}_{w}}{V} δt}\right]\right]} dt \frac{Δm}{Δp} ,$ Avec :
*ρ* [*kg*/*m*³] la masse volumique du gaz dans le réservoir 2,
*T* [*K*] la température du gaz,
*p* [*bar*] la pression du gaz,
*t* [*s*] le temps,
*cₚ* [*J*/*K*/*kg*] la capacité calorifique du gaz,
*β* [1/*K*] le coefficient de dilatation isobare du gaz,
*h* [J/kg] l'enthalpie du gaz,
*Tᵢₙⱼ* [*K*] la température du gaz injecté,
A [W/m/K] un paramètre tenant compte de la géométrie et du matériau du réservoir 2.

Soit $X = \frac{1}{{t}_{1} - {t}_{0}} {\int }_{{t}_{0}}^{{t}_{1}} \frac{\left[1-{\left.\frac{\partial ρ}{\partial T}\right|}_{p}\left[\frac{\left(h\left(p, {T}_{inj}\right)-h\left(p, T\right)\right)}{{ρc}_{p} + {k}_{g} \frac{{S}_{w}}{V} δt}\right]\right]}{\left[{\left.\frac{\partial ρ}{\partial p}\right|}_{T}+{\left.\frac{\partial ρ}{\partial T}\right|}_{p}\left[\frac{βT}{{ρc}_{p} + {k}_{g} \frac{{S}_{w}}{V} δt}\right]\right]} dt$ , et $Y = \frac{\left[1-{\left.\frac{\partial ρ}{\partial T}\right|}_{p}\left[\frac{\left(h\left(p, {T}_{inj}\right)-h\left(p, T\right)\right)}{{ρc}_{p} + {k}_{g} \frac{{S}_{w}}{V} δt}\right]\right]}{\left[{\left.\frac{\partial ρ}{\partial p}\right|}_{T}+{\left.\frac{\partial ρ}{\partial T}\right|}_{p}\left[\frac{βT}{{ρc}_{p} + {k}_{g} \frac{{S}_{w}}{V} δt}\right]\right]}$

On pourra remarquer que X est la moyenne temporelle de Y entre *t*₁ et *t*₀.

La fonction V peut prendre l'une des deux formes *V_{adia}, Vᵢₛₒ* définies ci-après selon la durée Δt de remplissage:
- Lorsque Δt tend vers zéro (c'est-à-dire pour un remplissage réalisé en moins de 5s), la fonction V tend vers *V_{adia}*: ${V}_{adia} = \frac{\left[1-{\left.\frac{\partial ρ}{\partial T}\right|}_{p}\left[\frac{\left(h\left(p, {T}_{inj}\right)-h\left(p, T\right)\right)}{{ρc}_{p}}\right]\right]}{\left[{\left.\frac{\partial ρ}{\partial p}\right|}_{T}+{\left.\frac{\partial ρ}{\partial T}\right|}_{p}\left[\frac{βT}{{ρc}_{p}}\right]\right]} \frac{Δm}{Δp} ,$
- Lorsque Δt tend vers l'infini (c.-à-d. la durée de remplissage est supérieure à 20 minutes), la fonction V tend vers *Vᵢₛₒ*: ${V}_{iso} = \frac{1}{\left[{\left.\frac{\partial ρ}{\partial p}\right|}_{T}\right]} \frac{Δm}{Δp} ,$

## Revendications

1. Procédé (10) d'estimation du volume d'un réservoir (2) de gaz sous pression, le procédé 10 comprenant les étapes suivantes :
a) détermination (S1) de la pression initiale (p₀) du gaz dans le réservoir (2),
b) détermination (S2) de la température initiale (T₀) du gaz dans le réservoir (2),
c) injection (S4) d'un flux de gaz sous pression dans le réservoir (2),
d) détermination (S3) de la température (*Tᵢₙⱼ*) d'injection du flux de gaz dans le réservoir (2),
e) détermination (S7) de la masse (Δm) du flux de gaz injecté dans le réservoir (2) au cours de l'étape d'injection (S4),
f) détermination (S6) de la variation (Δp) de la pression du gaz dans le réservoir (2), entre une pression finale (p₁) déterminée à la fin de l'étape d'injection (S4) et la pression initiale (p₀) déterminée au début de l'étape d'injection (S4),
g) calcul (S9) du volume du réservoir (2) en fonction de :
i) la pression initiale (p₀) du gaz dans le réservoir (2),
ii) la température initiale (T₀) du gaz dans le réservoir (2),
iii) la température d'injection (*Tᵢₙⱼ*) du flux de gaz dans le réservoir (2),
iv) la masse (Δm) du flux de gaz injecté dans le réservoir (2),
v) la variation (Δp) de la pression du gaz dans le réservoir (2),
**caractérisé en ce que** l'étape (S9) de calcul utilise également la durée (Δt) de l'étape d'injection (S4), ladite durée (Δt) étant définie entre un instant (t₁) marquant la fin de l'étape d'injection (S4) et un instant (t₀) marquant le début de l'étape d'injection (S4).

2. Procédé (10) selon la revendication précédente, dans lequel l'étape de calcul (S9) utilise également un paramètre (A) prédéterminé tenant compte à la fois de la géométrie et du matériau du réservoir (2).

3. Procédé (10) selon la revendication précédente, dans lequel le paramètre (A) prédéterminé est le produit d'une longueur caractéristique (*l_{c}*) du réservoir (2) par un coefficient (*k_{g}*) d'échange thermique entre le gaz sous pression et une paroi intérieure du réservoir (2).

4. Procédé (10) selon la revendication précédente, dans lequel la longueur caractéristique (*l_{c}*) a une valeur comprise entre une borne inférieure associée à un premier réservoir de référence de forme sphérique, et une borne supérieure associée à un deuxième réservoir de référence de forme cylindrique.

5. Procédé (10) selon la revendication précédente, dans lequel la borne inférieure de la longueur caractéristique (*l_{c}*) est égale au tiers d'un premier rayon intérieur (*Rᵢₙₜ*) du premier réservoir de référence de forme sphérique, c.-à-d. ${l}_{c} = \frac{{R}_{int}}{3}$, la borne supérieure de la longueur caractéristique (*l_{c}*) étant égale à la moitié d'un deuxième rayon intérieur (R*ᵢₙₜ*) du deuxième réservoir de référence de forme cylindrique, ç-à-d. ${l}_{c} = \frac{{R}_{int}}{2}$.

6. Procédé (10) selon l'une quelconque des revendications 3 à 5, dans lequel le coefficient (*k_{g}*) d'échange thermique a une valeur comprise entre une borne inférieure prédéterminée égale à 150 *W*/*m²*/*K*, et une borne supérieure prédéterminée égale à 10 000 *W*/*m*²/*K*.

7. Procédé (10) selon l'une quelconque des revendications précédentes, dans lequel l'étape de détermination (S3) de la température (*Tᵢₙⱼ*) d'injection du gaz dans le réservoir (2) est réalisée à l'aide d'un capteur (53) de température disposé au niveau d'une station (1) de remplissage à laquelle est relié le réservoir (2).

8. Procédé (10) selon l'une quelconque des revendications précédentes, dans lequel la température initiale (*T*₀) est estimée égale à la température ambiante dans une région environnante du réservoir (2).

9. Procédé (10) selon l'une quelconque des revendications précédentes, dans lequel l'étape de calcul (S9) utilise une fonction ou formule mathématique (V) obtenue à partir d'un bilan de conservation de la masse et de l'énergie du gaz injecté dans le réservoir (2).

10. Procédé (10) selon la revendication précédente prise dans son rattachement à la revendication 2, dans lequel la fonction (V) s'exprime de la manière suivante : $V = \frac{1}{{t}_{1} - {t}_{0}} {\int }_{{t}_{0}}^{{t}_{1}} \frac{\left[1-{\left.\frac{\partial ρ}{\partial T}\right|}_{p}\left[\frac{\left(h\left(p, {T}_{inj}\right)-h\left(p, T\right)\right)}{{ρc}_{p} + Λ \left(t-{t}_{1}\right)}\right]\right]}{\left[{\left.\frac{\partial ρ}{\partial p}\right|}_{T}+{\left.\frac{\partial ρ}{\partial T}\right|}_{p}\left[\frac{βT}{{ρc}_{p} + Λ \left(t-{t}_{1}\right)}\right]\right]} dt \frac{dm}{dp}$ Avec
*ρ* [*kg*/*m*³] la masse volumique du gaz,
*T* [*K*] la température du gaz,
*p* [*bar*] la pression du gaz,
t [*s*] le temps
*cₚ* [*J*/*K*/*kg*] la capacité calorifique du gaz,
*β* [1/*K]* le coefficient de dilatation isobare du gaz,
*h* [J/kg] l'enthalpie du gaz,
*Tᵢₙⱼ* [*K*] la température du gaz injecté,
A [W/m/K] paramètre tenant compte de la géométrie et du matériau du réservoir (2).

11. Procédé (10) selon la revendication précédente, dans lequel la fonction (V) prend l'une des deux formes suivantes (V_{adia}) et (Vᵢₛₒ) selon la durée (Δt) de remplissage :
Lorsque la durée (Δt) de remplissage tend vers zéro, la fonction (V) prend la forme (V_{adia}) suivante : ${V}_{adia} = \frac{\left[1-{\left.\frac{\partial ρ}{\partial T}\right|}_{p}\left[\frac{\left(h\left(p, {T}_{inj}\right)-h\left(p, T\right)\right)}{{ρc}_{p}}\right]\right]}{\left[{\left.\frac{\partial ρ}{\partial p}\right|}_{T}+{\left.\frac{\partial ρ}{\partial T}\right|}_{p}\left[\frac{βT}{{ρc}_{p}}\right]\right]} \frac{Δm}{Δp}$
Lorsque la durée (Δt) de remplissage tend vers l'infini, la fonction (V) prend la forme (Vᵢₛₒ) suivante : ${V}_{iso} = \frac{1}{\left[{\left.\frac{\partial ρ}{\partial p}\right|}_{T}\right]} \frac{Δm}{Δp}$
